# EUROPÄISCHE PATENTSCHRIFT

(11) **EP 0 865 467 B1**
(45) Veröffentlichungstag und Bekanntmachung des Hinweises auf die Patenterteilung: **20.10.1999**
(21) Anmeldenummer: 96939075.6
(22) Anmeldetag: 16.11.1996
(51) Int. Cl.: C09D 4/00, C08F 290/06, C08F 220/28

(54) **STRAHLENHÄRTBARE WÄSSRIGE LACKE MIT MATTEFFEKT**
RADIATION-HARDENED AQUEOUS MATT PAINTS
PEINTURES AQUEUSES A DURCISSEMENT PAR IRRADIATION AVEC EFFET MAT

(30) Priorität: 04.12.1995 DE 19545124
(43) Veröffentlichungstag der Anmeldung: 23.09.1998
(73) Patentinhaber: BASF Coatings Aktiengesellschaft, 48165 Münster (DE)
(72) Erfinder: KRANIG, Wolfgang, D-48308 Senden (DE); STEGEMANN, Nicole, D-48308 Senden (DE); PRIETO, Jorge, D-48165 Münster (DE); DICKERHOF, Karl-Heinz, D-48317 Drensteinfurt (DE)
(74) Vertreter: Fitzner, Uwe, Dr.
(86) Internationale Anmeldenummer: EP9605051
(87) Internationale Veröffentlichungsnummer: WO9720893

(56) Entgegenhaltungen:
- EP-A- 0 030 285
- WO-A-93/21240
- US-A- 3 966 572
- US-A- 5 271 988

## Beschreibung

### Gebiet der Erfindung

Die Erfindung betrifft strahlenhärtbare wäßrige Lacke mit Matteffekt enthaltend (a) mindestens ein wasserverträgliches Bindemittel, enthaltend mindestens zwei ethylenisch ungesättigte Gruppen, (b) mindestens ein Mattierungsmittel, (c) Wasser, gegebenenfalls enthaltend Säure als Neutralisierungsmittel, (d) gegebenenfalls weitere Füllstoffe und/oder Pigmente, (e) gegebenenfalls Photoinitiatoren und (f) gegebenenfalls weitere Hilfsmittel und/oder Additive.

### Stand der Technik

Es ist bekannt, Massen auf der Basis von Acrylsäureestern durch Strahlung, insbesondere UV-Strahlung, zu härten. Hier tritt jedoch das Problem auf, daß bei der Aushärtung von Oberflächen das Vorhandensein von Luft stört.

Aus der DE-PS 26 25 538 sind photopolymerisierbare Überzugsmassen bekannt, die als Reduktionsmittel bzw. kettenübertragende Verbindungen Amine enthalten. Die Verwendung eines solches freien Amins hat den Nachteil, daß dieses als Weichmacher wirken kann sowie zu einem unerwünschten Belag auf der Oberfläche und zu Geruchsbelästigungen führt.

Durch Einbau der Aminogruppe in ein Molekül, das noch polymerisationsfähige Gruppen enthält, wird ein bei der Härtung einpolymerisiertes Amin erhalten, das die obengenannten Nachteile nicht aufweist. Eine bekannte Methode des Einbaus ist die Addition von Aminen an doppelbindungsreiche Moleküle, die analog einer Michael-Addition verläuft und die beispielsweise in F. Möller, Houben-Weyl, Bd. 11/1 (1957), Seiten 277 bis 280, beschrieben ist. Die US-PS 2,759,913 lehrt die Anlagerung von Aminen an aktivierte, olefinisch ungesättigte Verbindungen, wie Acrylate, in äquimolaren Mengen, die zur vollständigen Umsetzung der aktivierten ethylenischen Doppelbindungen führt. Systematische Untersuchungen über die Anlagerung von Aminoalkoholen an Acrylate wurden von N. Ogata und T. Asahara, Bull. Chem. Soc. Jap. 39, Seiten 1486 bis 1490, 1966, durchgeführt.

In der DE-PS 23 46 424 wird die Herstellung von strahlungshärtbaren Massen, ausgehend von Acrylestern mehrwertiger Alkohole und sekundären, aliphatischen monofunktionellen Aminen, beschrieben. Diese Massen weisen den Nachteil verminderter Lagerstabilität auf. Die Anlagerung eines sekundären Amins führt außerdem zu einer Verminderung der Acrylesterfunktionalität des Moleküls und somit auch zu einer Verminderung der Vernetzungsmöglichkeiten für die strahlungsinduzierte Polymerisation.

Aus der EP-A-0 280 222 sind Additionsprodukte aus Estern der Acryl- oder Methacrylsäure und mehrwertigen Alkoholen mit primären Monoaminen bekannt, wobei das Molverhältnis von Monoamin zu (meth)acrylischer Doppelbindung des Esters 0,05 : 1 bis 0,4 : 1 beträgt. Die Additionsprodukte gemäß der EP-A-0 280 222 werden in strahlungshärtbaren Massen eingesetzt, die an der Luft aushärten. Die Lagerstabilität der aus der EP-A-0 280 222 bekannten Produkte ist jedoch unzureichend. So ist bei Lagerung der Additionsprodukte ein deutlicher Viskositätsanstieg zu verzeichnen. Weiterhin treten Verträglichkeitsprobleme bei Additionsprodukten aus vierwertigen Polyolen mit den primären Monoaminen auf. Derartige Produkte sind trübe bzw. haben ein milchigweißes Aussehen. Nachteilig ist außerdem bei den in der EP-A-0 280 222 beschriebenen aminmodifizierten Massen, daß ein relativ hoher Anteil an Monoamin notwendig ist, um in den erhaltenen Additionsprodukten für beispielsweise mit Benzophenon initiierte Systeme ausreichend hohe Stickstoffgehalte zu gewährleisten. Ausreichend hohe Stickstoffgehalte sind nötig, um bei üblicher Strahlendosis für eine in der Praxis ausreichende und vollständig verlaufende Photopolymerisation zu sorgen.

Die EP-A-0 002 457 beschreibt Kunststoffe für geformte Kunststoffteile, wobei die Kunststoffe unter erhöhten Temperaturen aushärten. Bei den Kunststoffen handelt es sich um Michael-Additionsprodukte aus Acrylsäureestermonomeren und Aminen mit einer Aminwasserstoff-Funktionalität von mindestens 3. Die Komponenten werden in einem Äquivalentverhältnis von Acrylat zu Aminwasserstoff von 0,5 bis 2,0 umgesetzt.

Aus den US-Patentschriften Nr. 4,547,562 und 4,675,374 sind strahlenhärtbare lösungsmittelfreie Zusammensetzungen bekannt auf Basis von Polyacrylaten und Mono-, Di- oder Polyaminen. Als geeignete Di- und Polyamine werden Spezies mit mehr als einer primären Aminogruppe genannt. Bei Verwendung dieser Polyamine werden hochvernetzte, höhermolekulare und damit höherviskose Überzugsmassen erhalten, die ohne Zusatz von Reaktivverdünnern und Lösungsmitteln eine zu hohe Applikationsviskosität aufweisen oder sogar zu festen Produkten führen.

Die US-PS 4,045,416 und US-PS 3,845,056 betreffen strahlenhärtbare überzugsmittel auf Basis von Aminacrylaten, welche erhalten werden durch Umsetzung von Polyacrylaten mit Aminen mit mindestens einem Amin-Wasserstoff. Als geeignete Amine werden primäre und sekundäre Monoamine sowie Polyamine genannt. Gemäß den US-Patenten werden als Polyaminkomponenten Polyamine mit mehr als einer primären Aminogruppe, Polyamine mit ausschließlich sekundären Aminogruppen oder Polyamine mit sekundären und tertiären Aminogruppen genannt. Bei Verwendung von Polyaminen mit mehr als einer primären Aminogruppe werden inhomogene Additionsprodukte mit geringer Lagerstabilität erhalten, die Verwendung von Polyaminen mit ausschließlich sekundären Aminogruppen, wie beispielsweise Piperazin, führt zu inhomogenen Gemischen auf Grund ungenügender Reaktivitäten oder von Unverträglichkeiten. Die Verwendung von Polyaminen mit sekundären und tertiären Aminogruppen führt nur zu einer Verminderung der Acrylsäure- bzw. Methacrylsäureesterfunktionalität des Moleküls.

Die beschriebenen Beschichtungsmittel dienen insbesondere dekorativen Zwecken, wobei ein besonderer dekorativer Effekt, beispielsweise auf Holzuntergründen durch den Einsatz mattierender Beschichtungsmittel erzielt wird.
Mattierte Oberflächen werden im allgemeinen durch eine Strukturierung der Oberfäche mit Hilfe sogenannter Mattierungsmittel erreicht.
Dabei erreichen marktübliche auf dem Stand der Technik basierende Beschichtungsmittel die für die Erzielung des Matteffekts notwendige Reduzierung des Glanzgrads entweder gar nicht oder nur durch die Verwendung ökologisch und/oder gesundheitlich bedenklicher Lösemittel. Auch treten bei marktüblichen Beschichtungsmitteln oftmals Verteilungsprobleme zwischen den jeweilig eingesetzten Mattierungsmitteln und Bindemittel auf, die zu Glanzgradabweichungen und Inhomogenitäten an der Lackoberfläche führen.

### Aufgabe und Lösung

Die daraus resultierende Aufgabe bestand daher darin, die zuvor beschriebenen Nachteile zu überwinden und strahlenhärtbare Lacke zur Verfügung zu stellen, die eine ausreichende Lagerstabilität, eine gute Reaktivität, eine niedrige Viskosität und vergleichweise gute resultierende Filmeigenschaften, wie insbesondere Filmhärte, aufweisen.
Weiterhin sollte, insbesondere aus ökologischen Gründen, auf die Verwendung von Monomerzusätzen, oder sogenannten Reaktivverdünnern, ebenso wie auf die Zugabe von organischen Lösemitteln weitgehend verzichtet werden.
Die resultierende Beschichtung sollte eine gute Haftung, auf den Untergründen, insbesondere auf kritischen Untergründen, wie beispielsweise folienbeschichteten Preßhölzern oder auf Kunststoffen, wie Polyvinylchlorid oder Polypropylen, aufweisen.
Im besonderen sollten Lacke zur Verfügung gestellt werden, die Beschichtungen mit mattierter Oberfläche bis hin zu stumpf-mattem Erscheinungsbild ermöglichen, bei gleichzeitig weitestgehender Vermeidung von organischen Lösemitteln und/oder reaktiven monomeren Verdünnungsmitteln als Lackbestandteile. Weiterhin besteht die Forderung nach einer möglichst gleichmäßigen Verteilung des Mattierungsmittels im Lack, insbesondere nach der Herstellung der Beschichtung, um eine hohe Verarbeitungssicherheit zu ermöglichen.

überraschenderweise wurde gefunden, daß strahlenhärtbare wäßrige Lacke mit Matteffekt, enthaltend:
(a) 40 bis 85 Gew.-%, bevorzugt 50 bis 75 Gew.-%, mindestens eines wasserverträglichen Bindemittels, enthaltend mindestens zwei ethylenisch ungesättigte Gruppen,
(b) 1 bis 20 Gew.-%, bevorzugt 5 bis 15 Gew.-%, eines Mattierungsmittel, das gemeinsam mit Paraffinwachsen eingesetzt wird,
(c) 5 bis 40 Gew.-%, bevorzugt 10 bis 30 Gew.-%, Wasser, gegebenenfalls enthaltend eine Säure als Neutralisierungsmittel,
(d) 0 bis 25 Gew.-%, bevorzugt 0 bis 20 Gew.-%, weitere Füllstoffe und/oder Pigmente,
(e) 0 bis 6 Gew.-%, bevorzugt 3 bis 5 Gew.-%, Photoinitiatoren in UV-Anwendungen, sowie
(f) 0 bis 15 Gew.-%, bevorzugt 0 bis 10 Gew.-%, weitere Hilfsmittel und/oder Additive
die eingangs gestellten Aufgaben hervorragend lösen.

Bevorzugt als Bindemittel (a) werden dabei (Meth)acrylsäureester von vorzugsweise ethoxylierten Polyolen eingesetzt, die wasserverträglich sind, das heißt zumindest in bestimmten Mischungsverhältnissen mit Wasser ohne sichtbare Phasentrennung mischbar sind. Eine solche Wasserverträglichkeit wird bevorzugt mit (meth)acrylierten Polyetherpolyolen realisiert, bestehend aus einem ethoxylierten Polyol mit einem Molekulargewicht von 600 bis 1000 Dalton, das mit (Meth)acrylsäure verestert ist, das vorzugsweise eine OH-Zahl von 150 bis 350 mg KOH/g und eine Viskosität von 300 bis 1000 mPas aufweist, das vorzugsweise 10- bis 20-fach ethoxyliert ist, das vorzugsweise aus ethoxyliertem Pentaerythrit aufgebaut ist, das vorzugsweise aus 50 bis 75 Gew.-% Polyetherpolyol, 20 bis 50 Gew.-% (Meth)acrylsäure und 0 bis 5 Gew.-% üblichen Hilfsstoffen besteht und das vorzugsweise UV-Initiatoren, besonders vorzugsweise Benzophenon, enthält.

In einer weiteren Ausführungsform der Erfindung kann die Wasserverträglichkeit der (Meth)acrylsäureester durch die Addition von Di- und/oder Polyaminen (B) an die genannten (Meth)acrylsäureester, vorzugsweise an die genannten (meth)acrylierten Polyetherpolyole, und anschließende Neutralisation der Aminogruppen mit einer Säure erreicht werden.
Bevorzugt sind als Di- und/oder Polyamine (B) Diamine mit einer primären und tertiären Aminogruppe, wobei das Verhältnis der primären Aminogruppen der Diamine (B) zu den (meth)acrylischen Doppelbindungen der Oligomeren und/oder Polymeren (A) 0,01 : 1 bis 0,2 : 1, besonders bevorzugt 0,03 : 1 bis 0,1 : 1 beträgt.

Weiterhin bevorzugt sind als Mattierungsmittel (b) vorzugsweise oberflächenbehandelte Schichtsilikate oder Polyamide, die eine niedrige Dichte aufweisen.

### Durchführung der Erfindung

### Das wasserverträgliche Bindemittel (a)

Das gemäß Anspruch 3 als wasserverträgliches Bindemittel (a) eingesetzte (meth)acrylierte Polyetherpolyol besteht aus einem ethoxylierten Polyol mit einem Molekulargewicht von 500 bis 1000, vorzugsweise 700 bis 900 Dalton, das mit Acrylsäure und/oder Methacrylsäure verestert ist.

In einer bevorzugten Ausführungsform der Erfindung besteht das (meth)acrylierte Polyetherpolyol (a) aus 50 bis 75 Gew.-%, vorzugsweise 55 bis 65 Gew.-%, Polyetherpolyol, 20 bis 50 Gew.-%, vorzugsweise 30 bis 45 Gew.-%, (Meth)acrylsäure und 0 bis 5 Gew.-% üblichen Hilfsstoffen.
Die zum Einsatz gelangenden Etheralkohole weisen im allgemeinen einen Ethoxylierungsgrad von 10 bis 20, vorzugsweise von 13 bis 17, auf, wobei der Ethoxylierungsgrad die Anzahl der Mole Ethylenoxid angibt, die an 1 Mol eines als Startermolekül verwendeten Polyols im Durchschnitt angelagert werden. Besonders bevorzugt werden ethoxylierte drei- und/oder vierwertige Alkohole mit einem Ethoxylierungsgrad von 3 bis 6 und einem Molekulargewicht von 224 bis 400 Dalton eingesetzt. Vorzugsweise kommt ethoxyliertes Pentaerythrit mit einem Molekulargewicht von 500 bis 1000, vorzugsweise von 700 bis 900 Dalton, zum Einsatz. Ein Beispiel ist Pentaerythrit, das mit 15 Ethoxyeinheiten verethert ist.
Vorzugsweise handelt es sich um Polyetherpolyole mit einer OH-Zahl zwischen 150 und 350, besonders bevorzugt zwischen 250 bis 320 mg KOH/g, und einer Viskosität zwischen 300 und 1000, besonders bevorzugt zwischen 400 und 600 mPas.
Die hydroxylgruppenhaltigen Polyether, die mit Acrylsäure und/oder Methacrylsäure verestert werden, werden durch die Umsetzung der zwei- und/oder mehrwertigen Alkohole mit verschiedenen Mengen an Ethylenoxid nach gut bekannten Methoden erhalten (vergleiche beispielsweise Houben-Weyl, Band 14/2, Makromolekulare Stoffe II, 1963).
Die Polyetherpolyole sind im wesentlichen frei von Propylenoxideinheiten. Dies bedeutet, daß bei der Alkoxylierungsreaktion neben Ethylenoxid allenfalls untergeordnete Mengen an Propylenoxid anwesend sein dürfen (das Molverhältnis von Ethylenoxid zu Propylenoxid beträgt mindestens 5:1).
Zur Herstellung des (meth)acrylierten Polyetherpolyols kommt vorzugsweise folgendes Verfahren zur Anwendung: Zunächst werden das Polyetherpolyol und die (Meth)acrylsäure auf 70 bis 110 Grad C, vorzugsweise 80 bis 100 Grad C in Gegenwart eines Schleppmittels, das zur Entfernung des freiwerdenden Reaktionswassers dient, aufgeheizt. Als Schleppmittel kommen dabei nur Stoffe in Betracht, deren Siedepunkt zwischen 60 und 110 Grad C, vorzugsweise zwischen 70 und 90 Grad C, liegen. Die Reaktionstemperatur wird aufrechterhalten, bis die Säurezahl unter 60 bis 80 mg KOH/g, vorzugsweise unter 65 bis 75 mg KOH/g, fällt. Die Anteile des Polyetherpolyols betragen hierbei gewöhnlich zwischen 50 und 75 Gew.-%, vorzugsweise zwischen 55 und 65 Gew.-%. Die (Meth)acrylsäure wird in Mengen von 20 bis 50 Gew.-%, vorzugsweise 30 bis 45 Gew.-%, zugesetzt. Daneben werden dem Reaktionsgemisch noch Polymerisationsinhibitoren, wie beispielsweise Hydrochinone, Katalysatoren zur Beschleunigung der Veresterungreaktion sowie Antioxidantien zugesetzt.

In einer weiteren Ausführungsform der Erfindung bestehen die wasserverträglichen Bindemittel (a) aus Additionsprodukten (AB) aus Oligomeren und/oder Polymeren (A) mit mindestens zwei Acrylsäureester- und/oder Methacrylsäureestergruppen pro Molekül und Di- und/oder Polyaminen (B), wobei vorzugsweise die Aminogruppen der Additionsprodukte (AB) mit einer Säure neutralisiert sind.
Geeignete Verbindungen (A) sind beispielsweise die Ester der Acrylsäure und/oder der Methacrylsäure mit zweiwertigen aliphatischen Alkoholen, wie Ethylenglykol, Propylenglykol-1,2 und -1,3, Butandiol-1,4, Pentandiol-1,2, Neopentylglykol, Hexandiol-1,6, 2-Methylpentandiol-1,5, 2-Ethylbutandiol-1,4, Dimethylolcyclohexan und Diethylenglykol, vorzugsweise mit dreiwertigen Alkoholen, wie Glycerin, Trimethylolethan, Trimethylolpropan und Trimethylolbutan, vorzugsweise mit vierwertigen Alkoholen, wie Pentaerythrit, sowie vorzugsweise mit höherwertigen Alkoholen, wie Di(trimethylolpropan), Di(pentaerythrit) und Sorbitol. Weiterhin sind mehrwertige cycloaliphatische Alkohole, wie beispielsweise 1,4-Bis-(hydroxymethyl)-cyclohexan, mehrwertige araliphatische Alkohole, wie 1,3-Xylylendiol sowie mehrwertige Phenole wie 2,2-Bis-(4-hydroxyphenyl)-propan (Bisphenol-A) geeignet.
Bevorzugt werden als Komponente (A) Ester aus Acrylsäure und/oder Methacrylsäure und drei- und/oder vierwertigen Alkoholen verwendet.
Besonders bevorzugt werden die oben aufgeführten mehrwertigen Alkohole vor der Veresterung mit Acrylsäure oder Methacrylsäure durch Alkoxylierung mit z.B. Ethylenoxid oder Propylenoxid in höhermolekulare Etheralkohole überführt, wie zuvor bei der Herstellung der (meth)acrylierten Polyetherpolyole beschrieben. Daraus resultieren die oben beschriebenen Polyetheracrylate oder Polyethermethacrylate. Derartige Polyether(meth)acrylate werden besonders bevorzugt als Komponente (A) in den erfindungsgemäßen Bindemitteln (a) verwendet.
Die hydroxylgruppenhaltigen Polyether, die mit Acrylsäure und/oder Methacrylsäure verestert werden, werden durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten. Einsetzbar sind auch Polymerisationsprodukte des Tetrahydrofurans oder Butylenoxids.

Als Komponente (A) kommen auch Polyesteracrylate und/oder Polyestermethacrylate in Frage. Zur Herstellung der Polyester(meth)acrylate werden als mehrwertige Alkohole hydroxylgruppenhaltige Polyester (Polyesterpolyole) eingesetzt. Diese können durch Veresterung von Dicarbonsäuren mit Diolen und Triolen nach gut bekannten Methoden (vgl. z.B. P.J. Flory, J. Am. Chem. Soc. 58, 1877 (1936) und J. Am. Chem. Soc. 63, 3083 (1953) hergestellt werden.
Die Herstellung von Polyetheracrylaten und Polyesteracrylaten ist beispielsweise beschrieben in der DE-A-38 36 370.

Als Komponente (B) bevorzugte Diamine mit einer primären und einer tertiären Aminogruppe sind beispielsweise N,N-Dialkyldiaminoalkane, wie z.B. N,N-Dimethyl-1,3-diaminopropan, welches durch katalytische Hydrierung von Dimethylaminopropionitril erhältlich ist. Die Herstellung dieses Diamins ist beispielsweise beschrieben in Houben-Weyl, Bd 11/1, 1957, S. 565, in der EP-A-316 761 oder in P. Lappe, H. Springer und J. Weber, Chem.-Ztg. 111(4), Seiten 117 bis 125 (1987).
Weitere geeignete Dialkylaminopropane sind N,N-Diethyl-1,3-diaminopropan, N,N-Di-n-propyl-1,3-diaminopropan, 4-Morpholinopropylamin, 3-(N-Piperidinyl)propylamin, N,N-Diphenyl-1,3-diaminopropan.
Als Komponente (B) der erfindungsgemäßen Additionsprodukte kommen weiterhin in Frage: N,N-Dialkyl-1,2-diaminoethan-Derivate, wie beispielsweise Dimethylaminoethylamin, Diethylaminoethylamin, N-beta-Aminoethylmorpholin (Herstellung siehe z.B. Houben Weyl, Bd. 11/1, 1957, S. 563), N,N-Dialkyl-1,5-diaminopentan-Derivate, die herstellbar sind durch 1,4-Addition von sekundären Aminen an 1-Cyanbutadien-1,3 unter Bildung der Nitrile und anschließender katalytischer Hydrierung (Herstellung siehe Houben-Weyl, Bd. 11/1, 1957, S. 276). Beispiele für geeignete N,N-Dialkyl-1,5-diaminopentan-Derivate sind Dimethylaminopentylamin, Diethylaminopentylamin, 4-Morpholinpentylamin. Besonders bevorzugt als Aminkomponente (B) ist N,N-Dimethyl-1,3-diaminopropan.

Das Verhältnis der Komponenten (A) zu (B) in den Additionsprodukten (AB) wird so gewählt, daß das Verhältnis von primären Aminogruppen von (B) zu den acrylischen bzw. methacrylischen Doppelbindungen von (A) 0,01 : 1 bis 0,2 : 1 beträgt. Bevorzugt ist dabei ein Verhältnis von 0,03 : 1 bis 0,1 : 1.

Die erfindungsgemäßen Additionsprodukte (AB) werden hergestellt, indem an einen Acrylsäureester oder Methacrylsäureester (A) oder an ein Gemisch dieser Ester in einer Michael-Reaktion die Diamine (B) addiert werden. Die erhaltenen aminmodifizierten Oligomere enthalten noch nichtumgesetzte Acrylester- und/oder Methacrylsäureestergruppen sowie tertiäre Aminogruppen.

### Die Mattierungsmittel (b)

Als Mattierungsmittel (b) werden im allgemeinen Teilchen mit hoher Dimensionsstabilität, vorzugsweise mit einer Teilchengröße von zwischen 1 und 15 Mikrometer, nicht jedoch über 50 Mikrometer, und einer vergleichsweise engen Teilchengrößenverteilung, da größere Teilchen zu Unregelmäßigkeiten in der Lackoberfläche führen, sowie mit einer relativ niedrigen Dichte, die zum Aufschwimmen der Mattierungsmittel während des Filmbildungsprozesses beim Lackieren führt, eingesetzt.

Bevorzugt werden als Mattierungsmittel poröse Schichtsilikate mit einem großen Porenvolumen und einer entsprechend niedrigen Dichte eingesetzt. Beispielhaft für solche Schichtsilikate seien die Syloid® -Typen der Firma Grace genannt, die mittlere Teilchengrößen von vorzugsweise zwischen 1 und 10 Mikrometern aufweisen.

Weiterhin können als Mattierungsmittel (b) Kunststoffteilchen, die den oben genannten Anforderungen genügen, eingesetzt werden. Bevorzugt werden Polyamid-Teilchen verwendet, wie z.B. Orgasol® -Typen der Firma Atochem, die Teilchengrößen zwischen 1 und 10 Mikrometern, eine hohe Glastemperatur zur Gewährleistung der Dimensionsstabilität sowie ein großes Porenvolumen aufweisen.

Gemeinsam mit dem Mattierungsmittel werden Paraffinwachse eingesetzt, die vor dem Einarbeiten des Mattierungsmittels in die wäßrige Lackformulierung dieser zugesetzt werden und/oder gemeinsam mit dem Mattierungsmittel in die Lackformulierung eingearbeitet werden. Solche Paraffinwachse belegen vorzugsweise die Oberfläche der Mattierungsmittel-Teilchen, was zu einer nochmaligen Verringerung der Dichte der Teilchen und zu einer Hydrophobierung der Teilchen führt.

### Die übrigen Bestandteile (d) bis (f) der wäßrigen Lacke, die Herstellung der wäßrigen Lacke und deren Anwendung

Die Umsetzung der Komponente (A) mit der Komponente (B) zum Additionsprodukt (AB) des Bindemittels (a) kann vor, während oder nach der Formulierung des wäßrigen Lacks erfolgen.

In einer Ausführungform der Erfindung wird die Additions-Reaktion wird in flüssiger Phase vor der Lackformulierung bei mäßiger Temperatur in Abwesenheit eines Katalysators durchgeführt. Das Diamin (B) wird in entsprechender Menge dem Ester (A) unter Rühren bei Raumtemperatur zugesetzt. Die Temperatur kann dabei auf etwa 40 Grad C ansteigen. Durch Erhöhung der Temperatur kann die Reaktion beschleunigt werden, bei 60 Grad C ist sie nach ca. 12 Stunden abgeklungen. Die Viskosität der erhaltenen Mischung ist dann zeitlich konstant. Wegen der Reproduzierbarkeit sollte die Reaktion möglichst vollständig ablaufen, was bei Reaktionstemperaturen über 40 Grad C erreicht wird.
Die Umsetzung wird im allgemeinen ohne Lösemittel durchgeführt, aber es können auch Lösemittel angewandt werden, insbesondere um feste Di- und/oder Polyamine (B) als Lösung zuzudosieren. Das Lösemittel wird dann nach erfolgter Michael-Addition entfernt.
Damit bei der Additionsreaktion keine unerwünschte Polymerisation stattfindet, werden dem Reaktionsgemisch im allgemeinen Polymerisationsinhibitoren zugesetzt. Zu den geeigneten Polymerisationsinhibitoren gehören bekannte Produkte, wie substituierte Phenole, wie 2,6-Di-tert.-butyl-p-kresol, Hydrochinone, wie Methylhydrochinone, und Thioether, wie Thiodiglykol oder Phenothiazin.

In einer weiteren Ausführungsform der Erfindung wird die Komponente (B) des Bindemittels (a) während und/oder nach der Herstellung der wäßrigen Lackformulierung bestehend aus den Komponenten (a) bis (f) zugegeben, wobei das Bindemittel (a) entweder aus der Komponente (A) allein oder aus einem Präaddukt der Komponenten (A) und (B) besteht.

Erfindungsgemäß werden in einem sich der Zugabe der Komponente (B) anschließenden Schritt die Additionsprodukte (AB) aus den Komponenten (A) und (B) durch Neutralisation, insbesondere der tertiären Aminogruppen, mit mindestens einer Säure in eine wasserverdünnbare Form überführt.
Zur Neutralisation der basischen Gruppen geeignete Säuren sind beispielsweise organische Säuren, wie Milchsure, Essigsäure oder Ameisensäure, oder mineralische Säuren, wie Phosphorsäure oder bevorzugt Salzsäure.

Die erfindungsgemäßen strahlenhärtbaren Zusammensetzungen können neben den beschriebenen Bindemitteln noch weitere photopolymerisierbare Bindemittel, welche ebenfalls aminmodifiziert sein können, enthalten. Als derartige weitere aminmodifizierte Bindemittel kommen z.B. die aus der EP-A-0 280 222 und die aus den US-Patentschriften Nr. 4,045,416, 4,547,562 und 4,675,374 bekannten strahlenhärtbaren Bindemittel in Frage. Als nicht-aminmodifizierte weitere Bindemittel kommen beispielsweise Polyetheracrylate, Polyethermethacrylate, Polyesteracrylate, Polyestermethacrylate, Urethanacrylate, Urethanmethacrylate, Epoxidacrylate und Epoxidmethacrylate in Frage.

Die in den erfindungsgemäßen wäßrigen Lacken gegebenenfalls anwesenden Füllstoffe und/oder Pigmente (d), die sich von den Mattierungsmitteln (b) signifikant unterscheiden, beispielsweise in der Dichte, können anorganische und/oder organische Materialien sein.
Beispielhaft für anorganische Füllstoffe und/oder Pigmente seien genannt: Titandioxide, Carbonate, wie beispielsweise Calciumcarbonat oder Calcium-Magnesium-Carbonat, Sulfate, wie beispielsweise Bariumsulfate (Schwerspat) oder Kaliumsulfate (Leichtspat) oder Silikate, wie beispielsweise Kaoline, Glimmer oder Quarzmehl. Bei den anorganischen Füllstoffen und/oder Pigmenten (d) ist zu berücksichtigen, daß die begriffliche Unterscheidung zwischen "Füllstoff" und "Pigment" oftmals nur schwer möglich ist, da Stoffe, wie beispielsweise Bariumsulfat oder Titandioxid, gleichzeitig als Füllstoff und Pigment wirken.
Als organische Füllstoffe und/oder Pigmente seien beispielhaft und stellvertretend für viele genannt: Ruße, Azofarbstoff-Pigmente oder Phthalocyaninfarbstoff-Pigmente.

Die strahlenhärtbaren wäßrigen Lacke enthalten gegebenenfalls als Komponente (e) üblicherweise in strahlenhärtbaren Überzugsmitteln eingesetzte Photoinitiatoren, beispielsweise Benzophenone, Benzoine oder Benzoinether, bevorzugt Benzophenon in UV-Zubereitungen. Auf die Verwendung von Synergisten kann verzichtet werden, da die in den Überzugsmitteln enthaltenen Ester aminmodifiziert sind und damit eine synergistische Wirkung aufweisen.

Die erfindungsgemäßen strahlenhärtbaren wäßrigen Lacke enthalten gegebenenfalls übliche Hilfsmittel und Additive (f),beispielsweise Entschäumer, Verlaufsmittel, filmbildende Hilfsmittel, z.B. Cellulose-Derivate, Gleitmittel, sowie in Mengen von bis zu 10 Gew.-% Lösemittel, wie beispielsweise Methoxypropanol. Die Gleitmittel können beispielweise in Anteilen von 0,5 bis 3 Gew.-%, die Verlaufsmittel in Anteilen von 0,2 bis 1 Gew.-%, bezogen auf den Lack, im wäßrigen Lack anwesend sein.

In einer erfindungsgemäßen Variante kann die Viskosität und Reaktivität des waßrigen Lacks durch Zugabe der Aminkomponente (B) vor der Applikation in gewissen Grenzen eingestellt werden. Vergehen zwischen der Zugabe der Aminkomponente (B) und der Applikation der Überzugsmasse etwa 48 Stunden, ist das Amin (B) nicht mehr in freier Form vorhanden, sondern an die übrigen Bestandteile des wäßrigen Lacks, insbesondere des Bindemittels (a), chemisch oder physikalisch gebunden. Es ist überraschend, daß die Reaktivität des unter Aminzugabe entstandenen Lacks gegenüber der oben beschriebenen Lackformulierung steigt. Versuche haben ergeben, daß je nach Menge des zugegebenen Amins (B) unter UV-Strahlung eine annähernd verdoppelte Reaktionsgeschwindigkeit und verdoppelte Viskosität beobachtet werden kann.

In einer bevorzugten Ausführungsform der Erfindung besteht demgemäß der Lack aus 95 bis 100 Gew.-%, besonders bevorzugt aus 98 bis 100 Gew.-% der oben beschriebenen Lackformulierung und aus 0 bis 5 Gew.-%, besonders bevorzugt 0 bis 2 Gew.-%, der Aminkomponente (B). Als Aminkomponente (B) kommen die bereits oben beschriebenen Verbindung in Betracht, das heißt bevorzugt Diamine mit primären und tertiären Aminogruppen, besonders bevorzugt Dimethylaminopropylamin. Wie schon oben beschrieben schließt sich der Zugabe der Aminkomponente (B) die Neutralisation des wäßrigen Lacks mit einer Säure an.

In einer weiteren Ausführungsform der Erfindung wird zunächst ein nicht-wasserlöslicher Praelack, enthaltend die Komponenten (a), (b), (d), (e) und (f), formuliert, wobei die Komponente (a) in diesem Fall nicht wasserlöslich ist. Der solchermaßen hergestellte Praelack wird in einem zweiten Schritt zunächst mit der Aminkomponente (B) unter Rühren vermischt, vorzugsweise bei Temperaturen zwischen Raumtemperatur und 60 Grad C und während einer Zeit von 1 bis 5 Stunden, und anschließend mit der wäßrigen Komponente (c), enthaltend eine Säure zur Neutralisation der Aminkomponente, zum erfindungsgemäßen Lack formuliert.

Die Überzugsmittel können durch Spritzen, Walzen, Fluten, Tauchen, Rakeln, Streichen, Gießen oder durch Vakumat-Applikation auf das Substrat, vorzugsweise auf Glas, Holz, auf Holzwerkstoffe oder auf Papier, aufgebracht werden.

Die Härtung der Lackfilme erfolgt direkt nach dem Auftragen oder nach dem Verdunsten von anwesendem Wasser mittels UV- oder Elektronenstrahlen. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA-Technology, Academic Press, London, United Kingdom 1984, Seiten 79 bis 111) und bedürfen keiner weiteren Beschreibung.

Die erfindungsgemäßen überzugsmittel eignen sich auch als Druckfarben.

Die erfindungsgemäßen strahlenhärtbaren Überzugsmittel weisen eine ausgezeichnete Lagerstabilität auf. Sie sind homogen, haben eine gute Strahlenhärtbarkeit, und sie führen nach der Strahlenhärtung zu Filmen mit ausgezeichneten Eigenschaften.
Die erhaltenen Filme zeichnen sich weiterhin durch einen ausgezeichneten Matteffekt (bei gleichzeitig hoher Transparenz des Films), der über eine reflektometrische Glanzmessung nach DIN 67 530 bestimmt wird, aus. Das Maß für die Güte des Matteffekt ist die Intensität des bei der Glanzmessung erfaßten reflektierten Lichts - je geringer die Intensität desto ausgeprägter der Matteffekt.

Die erfindungsgemäßen wäßrigen Lacke sind besonders als Decklacke auf Glas, Holz, Papier, Kunststoffen oder grundierten Substraten aller Art geeignet und können auch als grundierende Formulierungen für Glas, Holz , Papier und Kunststoff verwendet werden.

Nachfolgend wird die Erfindung anhand von Ausführungsbeispielen näher erläutert. Teile bedeuten Gewichtsteile, sofern nichts anderes angegeben wird.

### Beispiele:

### Beispiel 1: Formulierung des wäßrigen strahlenhärtbaren Lacks SL1

Der erfindungsgemäße wäßrige strahlenhärtbare Lack SL1 wird hergestellt durch Mischen der Komponenten:

| | | |
|---|---|---|
| (a) | 58,00 Teile | Polyetheracrylat, hergestellt aus Polyol PP150 der Firma Perstorp und Acrylsäure, |
| | | |
| (b) | 12,00 Teile | Schichtsilikat Syloid ED 50 der Firma Grace als Mattierungsmittel, |
| | | |
| (c) | 24,40 Teile | Wasser, |
| | | |
| (e) | 3,00 Teile | Benzophenon, sowie |
| | | |
| (f) | 2,00 Teile | Gleitmittel (Lanco Wax 1362D der Firma Langer & Co.) und |
| | 0,60 Teile | Entschäumungsmittel (Byk 022 der Firma Byk) |

### Beispiel 2: Formulierung des wäßrigen strahlenhärtbaren Lacks SL2

Der erfindungsgemäße wäßrige strahlenhärtbare Lack SL2 wird hergestellt durch Mischen der Komponenten:

| | | |
|---|---|---|
| (a) | 43,77 Teile | eines Gemischs aus 98,2 Gew.-% Polyetheracrylat, hergestellt aus Polyol Desmophen 550U der Firma Bayer und Acrylsäure und 1,8 Gew.-% N,N-Dimethyl-1,3-diaminopropan, |
| | 20,47 Teile | Polyetheracrylat, hergestellt aus Polyol PP150 der Firma Perstorp und Acrylsäure, |
| | | |
| (b) | 10,94 Teile | Schichtsilikat Syloid ED 50 der Firma Grace als Mattierungsmittel, |
| | | |
| (c) | 16,21 Teile | wässrige 1 %ige Salzsäure, |
| | | |
| (e) | 3,44 Teile | Benzophenon, sowie |
| | | |
| (f) | 5,16 Teile | Methoxypropanol. |

### Beispiel 3: Formulierung des wäßrigen strahlenhärtbaren Lacks SL3

Der erfindungsgemäße wäßrige strahlenhärtbare Lack SL3 wird hergestellt durch Mischen der Komponenten:

| | | |
|---|---|---|
| (a): | 58,00 Teile | Polyetheracrylat, hergestellt aus Polyol PP150 der Firma Perstorp und Acrylsäure, |
| (b) | 11,50 Teile | Schichtsilikat Syloid ED 50 der Firma Grace als Mattierungsmittel, |
| | | |
| (c) | 22,50 Teile | Wasser, |
| | | |
| (e) | 3,00 Teile | Benzophenon, sowie |
| | | |
| (f) | 2,00 Teile | Oberflächenhilfsmittel (Lanco Wax 1362 D der Firma Langer & Co.), |
| | 2,50 Teile | Oberflächenhilfsmittel (Talkum Steamic 00S der Firma Grolmann) und |
| | 0,50 Teile | Verdickungsmittel (Aerosil R972 der Firma Degussa AG) |

### Beispiel 4: Erzeugung eines wasserverträglichen Lack SL4 aus einem nicht wasserverträglichen Praelack

Der Praelack wird hergestellt durch Mischen der Komponenten:

| | | |
|---|---|---|
| (a) | 58,00 Teile | Polyetheracrylat (Laromer P033F der Firma BASF AG), |
| (b) | 12,00 Teile | Schichtsilikat Syloid ED 50 der Firma Grace als Mattierungmittel, |
| (e) | 3,00 Teile | Benzophenon (Irgacure 500 der Firma Ciba), sowie |
| (f) | 2,00 Teile | Oberflächenhilfsmittel (Lancc Wax 1362D der Firma Langer & Co.), |
| | 0,30 Teile | Entschaumungsmittel (Byk 022 der Firma Byk) und |
| | 0,30 Teile | Entschaumungsmittel (Byk 024 der Firma Byk). |

Anschließend an die Herstellung des Praelack werden zunächst 2,00 Teile N,N-Dimethyl-1,3-diaminopropan zugegeben, dann 3 Stunden bei Raumtemperatur gerührt und abschließend 24,40 Teile einer wäßrigen 3 %igen Salzsäure zugesetzt.
Es resultiert ein homogener Lack SL4, der beim Auftrag, wie auch die Lacke SL1, SL2 und SL3, zu einer gleichmäßigen Beschichtung führt.

### Vergleichsbeispiel: Dispergierung des Praelacks in Wasser bzw. in wäßriger 3 %iger Salzsäure ohne Erzeugung der Wasserverträglichkeit (Lack VL1)

Zunächst wird ein Praelack gemäß Beispiel 4 hergestellt, der anschließend mit 26,40 Teilen Wasser bzw. wäßriger 3 %iger Salzsäure versetzt wird.
Es resultiert ein inhomogener Lack VL1, der beim Auftrag zu einer ungleichmäßigen Beschichtung führt.

### Beispiel 5: Glanzmessungen an Beschichtungen mit den Lacken SL1, SL2, SL3, SL4 und VL1

Die Glanzmessungen werden reflektometrisch im Winkel von 60 Grad nach DIN 67 530 durchgeführt, wobei das Maß für den Glanz die Einheiten (E) des mit einem photoelektrischen Empfänger, auf den der reflektierte Lichtstrom auffällt, verbundenen Meßgeräts verwendet werden. Visuell gut erscheinende Matteffekte treten bei Werten unterhalb von 60 E (Seidenmatteffekt 40 bis 50 E) auf, besonders gute Matteffekte unterhalb von 30 E.
Untersucht wurden die erfindungsgemäßen Lacke SL1, SL2, SL3, SL4 sowie der Vergleichslack VL1 auf den Substraten Polyvinylchlorid PVC (Kunststoff), Glas und grundiertem Kirschbaumholz KBH. Bei der Beschichtung von Kirschbaumholz KBH wurde zunächst mit dem Lack SL3 grundiert (GR) und anschließend mit den Lacken SL1 und SL2 decklackiert (DL). Die Schichtdicken der nach der Lackierung und Härtung resultierenden Lackschicht sind jeweils im Klammern angegeben.
Die Härtung der Lacke erfolgte unter einen 80-Watt-Quecksilber-UV-Strahler. Typischerweise sind dabei Energieeinträge von 100 bis 250 mJ/cm2 üblich.

| Lack | Glanzmessung /E(Schichtdicke des Lacks in Mikrometer) auf | | |
|---|---|---|---|
| | Glas | PVC | KBH |
| SL1 | 18 (20) | 10 (12) | 10 (10 DL) |
| SL2 | 20 (20) | 16 (12) | 12 (10 DL) |
| SL3 | 18 (20) | 13 (12) | 18 (10) |
| SL4 | 30 (20) | 9 (12) | - |
| VL1 | 81 (20) | 45 (12) | - |

## Patentansprüche

1. Strahlenhärtbare wäßrige Lacke mit Matteffekt enthaltend:
(a) 40 bis 85 Gew.-% mindestens eines wasserverträglichen Bindemittels mit Gruppen,enthaltend mindestens zwei ethylenisch ungesättigte Gruppen,
(b) 1 bis 20 Gew.-% mindestens eines Mattierungsmittels, das gemeinsam mit Paraffinwachsen eingesetzt wird,
(c) 5 bis 40 Gew.-% Wasser, gegebenenfalls enthaltend eine Säure als Neutralisierungsmittel,
(d) 0 bis 25 Gew.-% weitere Füllstoffe und/oder Pigmente,
(e) 0 bis 6 Gew.-% Photoinitiator in UV-Anwendung sowie
(f) 0 bis 15 Gew.-% weitere Hilfsmittel und/oder Additive.

2. Strahlenhärtbare wäßrige Lacke nach Anspruch 1, dadurch gekennzeichnet, daß die Lacke
50 bis 75 Gew.-% der Komponente (a),
5 bis 15 Gew.-% der Komponente (b),
10 bis 30 Gew.-% der Komponente (c),
0 bis 20 Gew.-% der Komponente (d),
3 bis 5 Gew.-% der Komponente (e), sowie
0 bis 10 Gew.-% der Komponente (f)
enthalten.

3. Strahlenhärtbare wäßrige Lacke nach einem der Ansprüche 1 oder 2,
dadurch gekennzeichnet, daß das Bindemittel (a) ein (meth)acryliertes Polyetherpolyol ist, bestehend aus einem ethoxylierten Polyol mit einem Molekulargewicht von 600 bis 1000 Dalton, das mit Acrylsäure und/oder Methacrylsäure verestert ist.

4. Strahlenhärtbare wäßrige Lacke nach Anspruch 3,
dadurch gekennzeichnet, daß das Polyol ein OH-Zahl von 150 bis 350 g KOH/g und eine Viskosität von 300 bis 1000 mPas aufweist.

5. Strahlenhärtbare wäßrige Lacke nach einem der Ansprüche 3 oder 4,
dadurch gekennzeichnet, daß das Polyol 10- bis 20-fach ethoxyliert ist.

6. Strahlenhärtbare wäßrige Lacke nach einem der Ansprüche 3 bis 5,
dadurch gekennzeichnet, daß das Polyetheracrylat aus 50 bis 75 Gew.-% Polyetherpolyol, 20 bis 50 Gew.-% Acrylsäure und 0 bis 5 Gew.-% üblichen Hilfsstoffen besteht.

7. Strahlenhärtbare wäßrige Lacke nach einem der Ansprüche 3 bis 6,
dadurch gekennzeichnet, daß das Polyetherpolyol aus ethoxyliertem drei- und/oder vierwertigen Alkohol, insbesondere aus ethoxyliertem Pentaerythrit, besteht.

8. Strahlenhärtbare wäßrige Lacke nach einem der Ansprüche 3 bis 7,
dadurch gekennzeichnet, daß zu 95 bis 100 Gew.-% des Lacks gemäß einem der Ansprüche 3 bis 7 weitere 0 bis 5 Gew.-% mindestens eines Di- und/oder Polyamins (B) zugesetzt werden.

9. Strahlenhärtbare wäßrige Lacke nach Anspruch 8,
dadurch gekennzeichnet, daß das Di- und/oder Polyamin (B) ein Diamin mit einer primären und einer tertiären Aminogruppe ist.

10. Strahlenhärtbare wäßrige Lacke nach Anspruch 9,
dadurch gekennzeichnet, daß das Di- und/oder Polyamin (B) ein N,N-Dialkylaminoalkylamin ist.

11. Verfahren zur Herstellung der strahlenhärtbaren wäßrigen Lacke nach einem der Ansprüche 8 bis 10,
dadurch gekennzeichnet, daß in einer ersten Stufe die Lackkomponenten gemäß den Ansprüchen 1 oder 2 zu einem Lack formuliert werden und in einer zweiten Stufe zur Erhöhung der Wasserlöslichkeit des Bindemittel das Di- und/oder Polyamin (B) gemäß den Ansprüchen 8 bis 10 zugegeben und anschließend mit einer Säure neutralisiert wird.

12. Verfahren zur Herstellung der strahlenhärtbaren wäßrigen Lacke nach einem der Ansprüche 8 bis 10,
dadurch gekennzeichnet, daß in einer ersten Stufe die Lackkomponenten (a), (b), (d), (e) und (f) gemäß den Ansprüchen 1 oder 2 zu einem Praelack formuliert,werden, wobei das Bindemittel (a) nicht wasserverträglich ist, und in einer zweiten Stufe zur Erzeugung der Wasserlöslichkeit des Bindemittels (a) das Di- und/oder Polyamin (B) gemäß den Ansprüchen 8 bis 10 zugegeben und anschließend mit einer wäßrigen Säure gemäß Komponente (c) in Anspruch 1 neutralisiert wird.

13. Strahlenhärtbare wäßrige Lacke nach einem der Ansprüche 1 oder 2,
dadurch gekennzeichnet, daß das Bindemittel (a) Additionsprodukte (AB) aus Oligomeren und/oder Polymeren (A) mit mindestens zwei Acrylsäureester- und/oder Methacrylsäureestergruppen pro Molekül und aus Di- und/oder Polyaminen (B) enthält.

14. Strahlenhärtbare wäßrige Lacke nach Anspruch 13,
dadurch gekennzeichnet, daß als Komponente (A) Ester aus Acrylsäure und/oder Methacrylsäure und drei- bis vierwertigen Alkoholen eingesetzt werden.

15. Strahlenhärtbare wäßrige Lacke nach einem der Ansprüche 13 oder 14,
dadurch gekennzeichnet, daß die Komponente (A) ein Polyetheracrylat und/oder ein Polyethermethacrylat ist.

16. Strahlenhärtbare wäßrige Lacke nach einem der Ansprüche 13 bis 15,
dadurch gekennzeichnet, daß die Di- und/oder Polyamine (B) Diamine mit einer primären und einer tertiären Aminogruppe sind, wobei das Verhältnis der primären Aminogruppen der Diamine (B) zu den (meth)acrylischen Doppelbindungen der Oligomeren und/oder Polymeren (A) 0,01 bis 1 bis 0,2 : 1 beträgt.

17. Strahlenhärtbare wäßrige Lacke nach Anspruch 16,
dadurch gekennzeichnet, daß die Komponente (B) ein N,N-Dialkylaminoalkylamin ist.

18. Strahlenhärtbare wäßrige Lacke nach einem der Ansprüche 13 bis 17,
dadurch gekennzeichnet, daß zu 95 bis 100 Gew.-% des Lacks gemäß einem der Ansprüche 12 bis 16 weitere 0 bis 5 Gew.-% der Komponente (B) zugesetzt werden.

19. Verfahren zur Herstellung der strahlenhärtbaren wäßrigen Lacke nach einem der Ansprüche 13 bis 18,
dadurch gekennzeichnet, daß in einer ersten Stufe die der Lackformulierung die gesamte Menge an Komponente (B) zugesetzt wird und in einer zweiten Stufe die Komponente (B) mit einer Säure neutralisiert wird.

20. Verfahren zur Herstellung der strahlenhärtbaren wäßrigen Lacke nach einem der Ansprüche 13 bis 18,
dadurch gekennzeichnet, daß in einer ersten Stufe die Lackkomponenten mit einem Teil der Komponente (B) zu einem Lack formuliert werden und in einer zweiten Stufe der restliche Teil der Komponente (B) zugegeben wird und anschließend die Komponente (B) mit einer Säure neutralisiert wird.

21. Strahlenhärtbare wäßrige Lacke nach einem der Ansprüche 1 bis 10 und 13 bis 18
dadurch gekennzeichnet, daß das Mattierungsmittel (b), das gemeinsam mit Paraffinwachsen eingesetzt wird, Partikel enthält, bestehend aus einem Schichtsilikat oder aus Polyamiden, wobei die mittlere Teilchengröße der Partikel zwischen 1 und 15 Mikrometer liegt.

22. Verwendung der wäßrigen Lacke gemäß der Ansprüche 1 bis 10 und 13 bis 18 zur Beschichtung von gegebenenfalls grundiertem Glas, Holz, Papier und Kunststoff.

## Claims

1. Radiation-curable aqueous coating materials with a matt effect, comprising:
(a) from 40 to 85% by weight of at least one water-compatible binder with groups, containing at least two ethylenically unsaturated groups,
(b) from 1 to 20% by weight of at least one matting agent which is employed in conjunction with paraffin wax,
(c) from 5 to 40% by weight of water, with or without an acid as neutralizing agent,
(d) from 0 to 25% by weight of further fillers and/or pigments,
(e) from 0 to 6% by weight of a photoinitiator for use in UV, and
(f) from 0 to 15% by weight of other auxiliaries and/or additives.

2. Radiation-curable aqueous coating materials according to Claim 1, characterized in that the coating materials comprise
from 50 to 75% by weight of component (a),
from 5 to 15% by weight of component (b),
from 10 to 30% by weight of component (c),
from 0 to 20% by weight of component (d),
from 3 to 5% by weight of component (e), and
from 0 to 10% by weight of component (f).

3. Radiation-curable aqueous coating materials according to one of Claims 1 or 2, characterized in that the binder (a) is a (meth)acrylicized polyetherpolyol consisting of an ethoxylated polyol with a molecular weight of from 600 to 1000 daltons which is esterified with acrylic acid and/or methacrylic acid.

4. Radiation-curable aqueous coating materials according to Claim 3, characterized in that the polyol has an OH number of from 150 to 350 g of KOH/g and a viscosity of from 300 to 1000 mPas.

5. Radiation-curable aqueous coating materials according to one of Claims 3 or 4, characterized in that the polyol is ethoxylated from 10 to 20 times.

6. Radiation-curable aqueous coating materials according to one of Claims 3 to 5, characterized in that the polyether acrylate consists of from 50 to 75% by weight of polyetherpolyol, from 20 to 50% by weight of acrylic acid and from 0 to 5% by weight of customary auxiliaries.

7. Radiation-curable aqueous coating materials according to one of Claims 3 to 6, characterized in that the polyetherpolyol consists of ethoxylated tri- and/or tetrahydric alcohol, especially of ethoxylated pentaerythritol.

8. Radiation-curable aqueous coating materials according to one of Claims 3 to 7, characterized in that a further from 0 to 5% by weight of at least one di- and/or polyamine (B) are added to from 95 to 100% by weight of the coating material according to one of Claims 3 to 7.

9. Radiation-curable aqueous coating materials according to Claim 8, characterized in that the di- and/or polyamine (B) is a diamine having a primary and a tertiary amino group.

10. Radiation-curable aqueous coating materials according to Claim 9, characterized in that the di- and/or polyamine (B) is an N,N-dialkylaminoalkylamine.

11. Process for the preparation of the radiation-curable aqueous coating materials according to one of Claims 8 to 10, characterized in that in a first stage the coating components according to Claims 1 or 2 are formulated into a coating material and in a second step, to increase the water-solubility of the binder, the di- and/or polyamine (B) according to Claims 8 to 10 is added, and is then neutralized with an acid.

12. Process for the preparation of the radiation-curable aqueous coating materials according to one of Claims 8 to 10, characterized in that in a first stage the coating components (a), (b), (d), (e) and (f) according to claims 1 or 2 are formulated into a precoating material, the binder (a) being incompatible with water, and in a second stage, to produce the water-solubility of the binder (a), the di- and/or polyamine (B) according to Claims 8 to 10 is added and is then neutralized with an aqueous acid in accordance with component (c) in Claim 1.

13. Radiation-curable aqueous coating materials according to one of Claims 1 or 2, characterized in that the binder (a) comprises addition products (AB) of oligomers and/or polymers (A) having at least two acrylic ester and/or methacrylic ester groups per molecule and of di- and/or polyamines (B).

14. Radiation-curable aqueous coating materials according to Claim 13, characterized in that esters of acrylic acid and/or methacrylic acid and tri- to tetrahydric alcohols are employed as component (A).

15. Radiation-curable aqueous coating materials according to one of Claims 13 or 14, characterized in that component (A) is a polyether acrylate and/or a polyether methacrylate.

16. Radiation-curable aqueous coating materials according to one of Claims 13 to 15, characterized in that the di- and/or polyamines (B) are diamines having a primary and a tertiary amino group, the ratio of the primary amino groups of the diamines (B) to the (meth)acrylic double bonds of the oligomers and/or polymers (A) being from 0.01 to 1 to 0.2 : 1.

17. Radiation-curable aqueous coating materials according to Claim 16, characterized in that component (B) is an N,N-dialkylaminoalkylamine.

18. Radiation-curable aqueous coating materials according to one of Claims 13 to 17, characterized in that a further from 0 to 5% by weight of component (B) are added to from 95 to 100% by weight of the coating material according to one of Claims 12 to 16.

19. Process for the preparation of the radiation-curable aqueous coating materials according to one of Claims 13 to 18, characterized in that in a first stage the the [sic] entire quantity of component (B) is added to the coating formulation and in a second stage the component (B) is neutralized with an acid.

20. Process for the preparation of the radiation-curable aqueous coating materials according to one of Claims 13 to 18, characterized in that in a first stage the coating components are formulated with some of component (B) into a coating material and in a second stage the remaining part of component (B) is added and then the component (B) is neutralized with an acid.

21. Radiation-curable aqueous coating materials according to one of Claims 1 to 10 and 13 to 18, characterized in that the matting agent (b), which is employed in conjunction with paraffin wax, comprises particles consisting of a phyllosilicate or of polyamides, the mean particle size of the particles being between 1 and 15 micrometers.

22. Use of the aqueous coating materials according to Claims 1 to 10 and 13 to 18 for coating primed or unprimed glass, wood, paper and plastic.

## Revendications

1. Matériaux de revêtement aqueux à effet mat, durcissables aux rayonnements, contenant :
(a) de 40 à 85% en poids d'au moins un liant compatible avec l'eau ayant des groupes, renfermant au moins deux groupes éthyléniquement insaturés,
(b) de 1 à 20% en poids d'au moins un agent de matité qui est utilisé conjointement avec des cires paraffiniques,
(c) de 5 à 40% en poids d'eau, contenant éventuellement un acide en tant qu'agent neutralisant,
(d) de 0 à 25% en poids d'autres charges et/ou pigments,
(e) de 0 à 6% en poids d'un photoamorceur utilisé en UV, et
(f) de 0 à 15% en poids d'autres auxiliaires et/ou additifs.

2. Matériaux de revêtement aqueux durcissables aux rayonnements selon la revendication 1, caractérisés en ce que les revêtements contiennent
de 50 à 75% en poids du composant (a),
de 5 à 15% en poids du composant (b),
de 10 à 30% en poids du composant (c),
de 0 à 20% en poids du composant (d),
de 3 à 5% en poids du composant (e), et
de 0 à 10% en poids du composant (f).

3. Matériaux de revêtement aqueux durcissables aux rayonnements selon l'une quelconque des revendications 1 ou 2, caractérisés en ce que le liant (a) est un polyéther-polyol (méth)acrylé constitué d'un polyol éthoxylé ayant un poids moléculaire de 600 à 1 000 daltons, qui est estérifié avec l'acide acrylique et/ou l'acide méthacrylique.

4. Matériaux de revêtement aqueux durcissables aux rayonnements selon la revendication 3, caractérisés en ce que le polyol présente un indice OH de 150 à 350 g KOH/g et une viscosité de 300 à 1 000 mPas.

5. Matériaux de revêtement aqueux durcissables aux rayonnements selon l'une quelconque des revendications 3 ou 4, caractérisés en ce que le polyol est éthoxylé de 10 à 20 fois.

6. Matériaux de revêtement aqueux durcissables aux rayonnements selon l'une quelconque des revendications 3 à 5, caractérisés en ce que le polyéther-acrylate est constitué de 50 à 75% en poids de polyéther-polyol, de 20 à 50% en poids d'acide acrylique et de 0 à 5% en poids d'auxiliaires habituels.

7. Matériaux de revêtement aqueux durcissables aux rayonnements selon l'une quelconque des revendications 3 à 6, caractérisés en ce que le polyéther-polyol est constitué d'alcool éthoxylé tri et/ou tétrahydrique, en particulier de pentaérythritol éthoxylé.

8. Matériaux de revêtement aqueux durcissables aux rayonnements selon l'une quelconque des revendications 3 à 7,
caractérisés en ce que de 0 à 5% en poids supplémentaires d'au moins une diamine et/ou polyamine (B) sont ajoutés à 95 à 100% en poids du matériau de revêtement selon l'une quelconque des revendications 3 à 7.

9. Matériaux de revêtement aqueux durcissables aux rayonnements selon la revendication 8, caractérisés en ce que la diamine et/ou polyamine (B) est une diamine ayant un groupe amino primaire et un groupe amino tertiaire.

10. Matériaux de revêtement aqueux durcissables aux rayonnements selon la revendication 9, caractérisés en ce que la diamine et/ou polyamine (B) est une N,N-di-alkylaminoalkylamine.

11. Procédé de préparation des matériaux de revêtement aqueux durcissables aux rayonnements selon l'une quelconque des revendications 8 à 10, caractérisé en ce que, dans une première étape, les composants de revêtement selon les revendications 1 ou 2 sont formulés en un matériau de revêtement et, dans une deuxième étape, en vue d'augmenter l'hydrosolubilité du liant, la diamine et/ou polyamine (B) selon les revendications 8 à 10 est ajoutée et est ensuite neutralisée par un acide.

12. Procédé de préparation des matériaux de revêtement aqueux durcissables aux rayonnements selon l'une quelconque des revendications 8 à 10, caractérisé en ce que, dans une première étape, les composants de revêtement (a), (b), (d), (e) et (f) selon les revendications 1 ou 2 sont formulés en un matériau de prérevêtement, le liant (a) n'étant pas compatible avec l'eau, et dans une deuxième étape, en vue d'obtenir l'hydrosolubilité du liant (a), la diamine et/ou polyamine (B) selon les revendications 8 à 10 est ajoutée et est ensuite neutralisée par un acide aqueux conformément au composant (c) à la revendication 1.

13. Matériaux de revêtement aqueux durcissables aux rayonnements selon l'une quelconque des revendications 1 ou 2, caractérisés en ce que le liant (a) contient des produits d'addition (AB) d'oligomères et/ou de polymères (A) ayant au moins deux groupes ester acrylique et/ou ester méthacrylique par molécule et de diamines et/ou polyamines (B) .

14. Matériaux de revêtement aqueux durcissables aux rayonnements selon la revendication 13, caractérisés en ce que l'on utilise, en tant que composant (A), des esters de l'acide acrylique et/ou de l'acide méthacrylique et d'alcools tri- à tétrahydriques.

15. Matériaux de revêtement aqueux durcissables aux rayonnements selon l'une quelconque des revendications 13 ou 14, caractérisés en ce que le composant (A) est un polyéther-acrylate et/ou un polyéther-méthacrylate.

16. Matériaux de revêtement aqueux durcissables aux rayonnements selon l'une quelconque des revendications 13 à 15, caractérisés en ce que les diamines et/ou les polyamines (B) sont des diamines ayant un groupe amino primaire et un groupe amino tertiaire, le rapport entre les groupes amino primaires des diamines (B) et les doubles liaisons (méth)acryliques des oligomères et/ou polymères (A) est de 0,01:1 à 0,2:1.

17. Matériaux de revêtement aqueux durcissables aux rayonnements selon la revendication 16 caractérisés en ce que le composant (B) est une N,N-dialkylaminoalkyl-amine.

18. Matériaux de revêtement aqueux durcissables aux rayonnements selon l'une quelconque des revendications 13 à 17, caractérisés en ce que de 0 à 5% en poids supplémentaires du composant (B) sont ajoutés à 95 à 100% en poids du matériau de revêtement selon l'une quelconque des revendications 12 à 16.

19. Procédé de préparation des matériaux de revêtement aqueux durcissables aux rayonnements selon l'une quelconque des revendications 13 à 18, caractérisé en ce que, dans une première étape, la quantité totale du composant (B) est ajoutée à la formulation de revêtement et, dans une deuxième étape, le composant (B) est neutralisé par un acide.

20. Procédé de préparation des matériaux de revêtement aqueux durcissables aux rayonnements selon l'une quelconque des revendications 13 à 18, caractérisé en ce que, dans une première étape, les composants de revêtement sont formulés avec une partie du composant (B) en un matériau de revêtement et, dans une deuxième étape, la partie restante du composant (B) est ajoutée et le composant (B) est ensuite neutralisé par un acide.

21. Matériaux de revêtement aqueux durcissables aux rayonnements selon l'une quelconque des revendications 1 à 10 et 13 à 18, caractérisés en ce que l'agent de matité (b), qui est utilisé conjointement avec des cires paraffiniques, contient des particules constituées d'un phyllosilicate ou de polyamides, la taille de particules moyenne des particules étant comprise entre 1 et 15 micromètres.

22. Utilisation des matériaux de revêtement aqueux selon les revendications 1 à 10 et 13 à 18 pour le revêtement de verre, de bois, de papier et de plastique, ayant éventuellement reçu une couche d'apprêt.
